# EUROPEAN PATENT SPECIFICATION

(11) **EP 4 688 277 B1**
(45) Date of publication and mention of the grant of the patent: **02.09.2026**
(21) Application number: 24730769.7
(22) Date of filing: 08.05.2024
(51) Int. Cl.: B05B 1/26, B05B 3/00, B05B 3/04, B05B 3/08, B05B 12/08, B05B 15/00, F03B 13/00, H02K 7/18

(54) **REMOTELY CONTROLLABLE SPRINKLER WITH BUILT-IN ELECTRIC GENERATOR AND BUILT-IN KIT**
FERNSTEUERBARER SPRINKLER MIT EINGEBAUTEM STROMGENERATOR UND EINBAUSATZ
ARROSEUR TÉLÉCOMMANDABLE AVEC GÉNÉRATEUR ÉLECTRIQUE INTÉGRÉ ET KIT INTÉGRÉ

(30) Priority: 18.05.2023 IT 202300010038
(43) Date of publication of application: 11.02.2026
(73) Proprietor: Komet Austria GmbH, 9900 Lienz (AT)
(72) Inventor: DRECHSEL, Arno, 9900 Lienz (AT)
(74) Representative: Maroscia, Antonio
(86) International application number: PCT/IB2024/054488
(87) International publication number: WO 2024/236427

(56) References cited:
- WO-A1-2016/150381
- CA-A1- 3 132 293
- FR-A1- 2 855 369

## Description

### Field of the invention

The present invention generally relates to the technical field of irrigation and liquid distribution systems for farming and industrial purposes, and it particularly relates to a remotely controllable sprinkler with built-in electric generator.

The invention also relates to a kit for incorporating an electric generator in a conventional sprinkler and make it remotely controllable.

### Background art

The use of sprinkler devices connected to a liquid supply line, generally water, for evenly distributing the liquid on a soil to be irrigated has been long known in the technical field of the irrigation systems.

The current long-range sprinklers have always been motor-driven to allow the users to control them remotely and constantly set the parameters of the irrigation cycle so as to increasingly improve irrigation efficiency and water saving.

These settings can be pre-programmed or carried out in real time. Besides the adjustment parameters, there are recorded all the data such as for example the amounts of water dispensed in the different irrigation cycles carried out on the various distribution stations.

In this manner, farmers have the possibility of meeting the obligations laid down by the competent authorities due to water shortage, with ensuing limitations and regulations with allocation of defined amounts of water depending on the surface area to be irrigated.

In order to control a sprinkler, this latter should be equipped with actuators which allow to modify, for example, the swinging angle, the lift angle or even the diameter of a nozzle with variable flow rate if available to obtain a distribution that is the most efficient possible using irrigation water to the uttermost.

To this end, in addition to the actuators other devices are required such as sensors of the GPS type, electronic compass, pressure sensor, gyroscopic sensor, temperature sensor, wind direction and strength sensor, as well as the means required for communication and control, such as electronic boards, microcontrollers, storage units, and other electronic systems required by the users.

All these devices have to be powered with electrical energy which can be supplied by a power supply line or by one or more batteries. Providing a power line is expensive and impracticable. Use of batteries is not suitable due to the poor durable operating time and also because it requires frequent changing and charging of batteries.

The use of solar panels for charging a battery on a sprinkler or on a sprinkler carriage is not optimal given that the irrigation is frequently carried out at night. In addition, the panels are constantly exposed to the irrigation water which can reduce the efficiency thereof due to deposits of scale, ferrous oxides and other opacifying materials on the surfaces exposed to light in such a manner to prevent the charging of the batteries.

Another problem lies in that a long-range sprinkler typically has a rotary joint to which there is connected a spout tube which distributes the water on a given angular sector to be irrigated.

This allows all electronic components and actuators as well as power source to move integrally joined with the spout tube so as to prevent the power supply cables from intersecting at the rotary joint. This is also due to the fact that a long-range sprinkler could operate in a circular instead of sectorial fashion.

IT-B-1362314 discloses a distributor of an irrigation liquid provided with a spout tube and with an electric energy generator actuated by a hydraulic turbine with radial vanes supplied by a part of the flow coming from the water supply source. The part of the flow which feeds the turbine is drawn from the inlet area of the spout tube and is directed in the form of a jet which impacts the vanes of the turbine of the open type. A drawback of such known sprinkler lies in that the flow portion which feeds the turbine after interaction with the vanes drops by gravity on the surface to be irrigated in areas close to the sprinkler, generating holes in the ground and dispersing the water which should be better used in the pre-established areas.

Systems for generating electrical energy in irrigation systems are also disclosed by US3750001, US6864591, US4838310 which however do not allow optimal use and distribution of the drawn irrigation water portion. FR2855369A1 discloses another sprinkler according to the prior art.

### Technical problem

In the light of the prior art, the technical problem addressed by the present invention is to allow a liquid distributor device to be electrically self-sufficient and remote controllable by using the overall liquid flow coming from the hydraulic supply line.

### Summary of the invention

The object of the present invention is to solve the aforementioned problem by providing a liquid distributor device which is highly efficient, reliable and cost-effective.

A particular object of the present invention is to provide a device of the type indicated above which allows to independently generate electrical energy using a small part of the irrigation liquid flow.

**A** further particular object of the present invention is to provide a sprinkler device that effectively uses the entire flow rate of liquid coming from a supply line.

Another object of the present invention is to provide a sprinkler of the type described above which has a structure that is relatively simple and which is easy to assemble and maintain.

Another object of the present invention is to provide a kit for converting a conventional sprinkler device into an electrically independent and remotely controllable one.

These and other objects which will be more apparent hereinafter, are achieved by a liquid distributor device according to claim 1.

In a further aspect of the invention there is provided a kit for rendering electrically self-sufficient a sprinkler device of the type indicated above in accordance with the claim.

Advantageous embodiments of the invention are obtained according to the dependent claims.

### Brief description of the drawings

Further features and advantages of the invention will be more apparent in the light of the detailed description of some embodiments of a sprinkler device, shown by way of non-limiting example with reference to the following drawing sheets, wherein:
**FIG. 1** is a lateral view of a sprinkler device according to the invention;

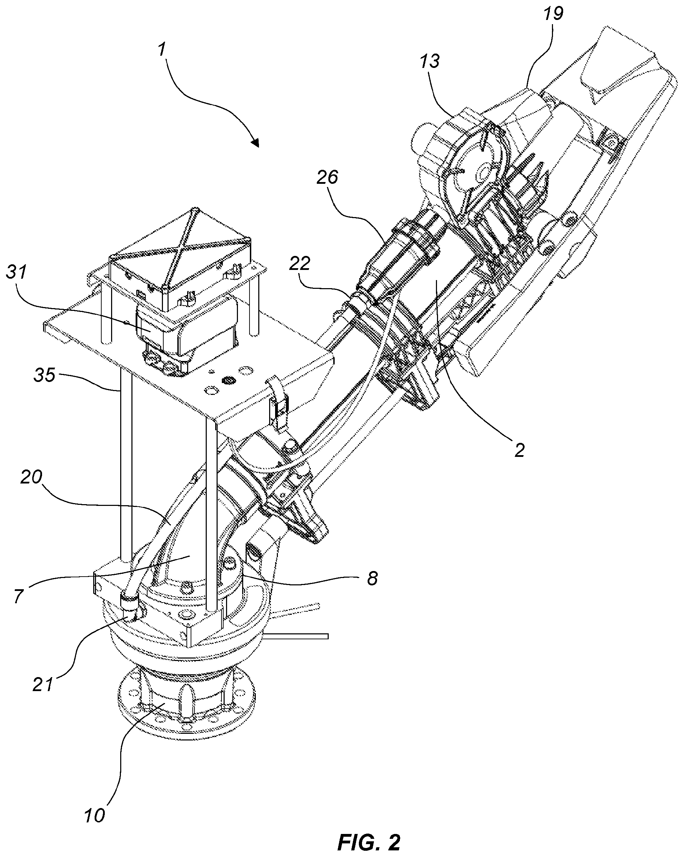

**FIG. 2** is a rear perspective view of the sprinkler device of **FIG. 1** deprived of some parts for sake of clarity;

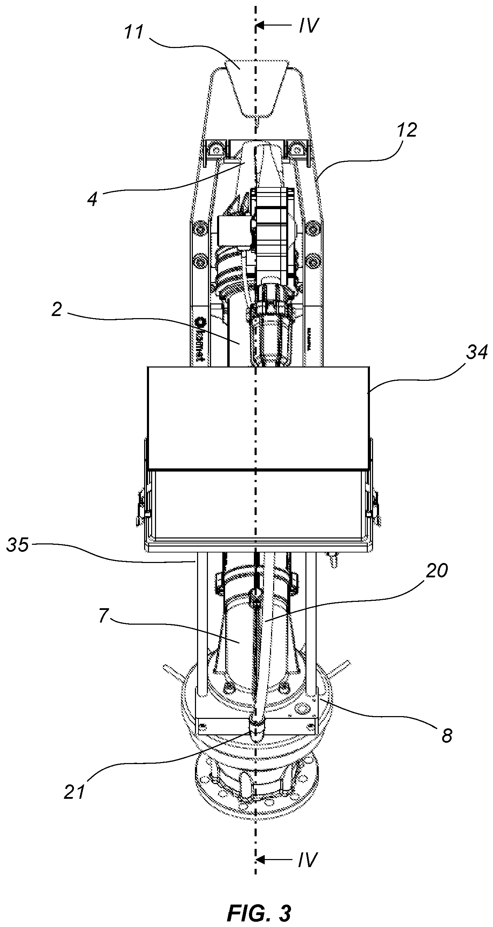

**FIG. 3** is a top view of the device of **FIG. 1****;**
**FIG. 4** is a cross-sectional lateral view taken along the plane IV-IV of **FIG. 3****;**

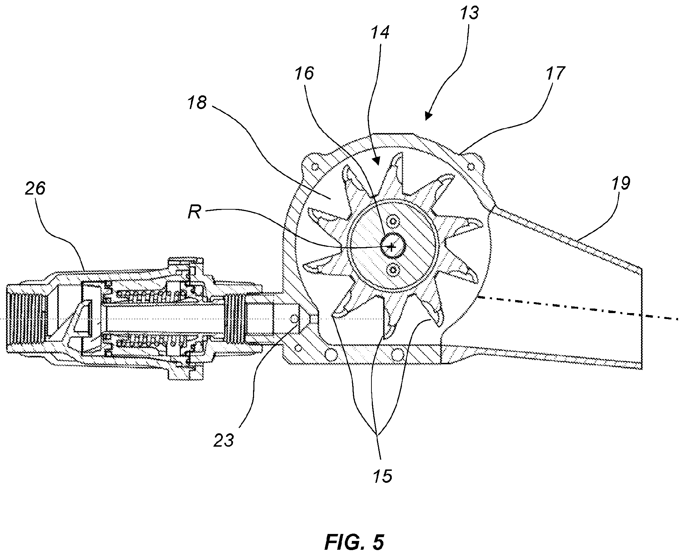

**FIG. 5** is a cross-sectional view of a detail of the sprinkler device of **FIG. 1** taken along a longitudinal vertical plane;

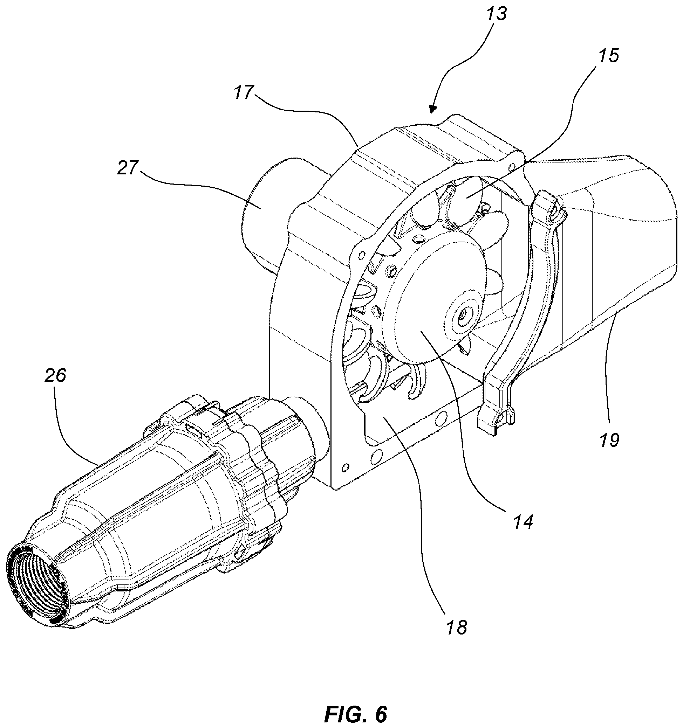

**FIG. 6** is a perspective view of the detail of **FIG. 5** deprived of some parts for sake of clarity;

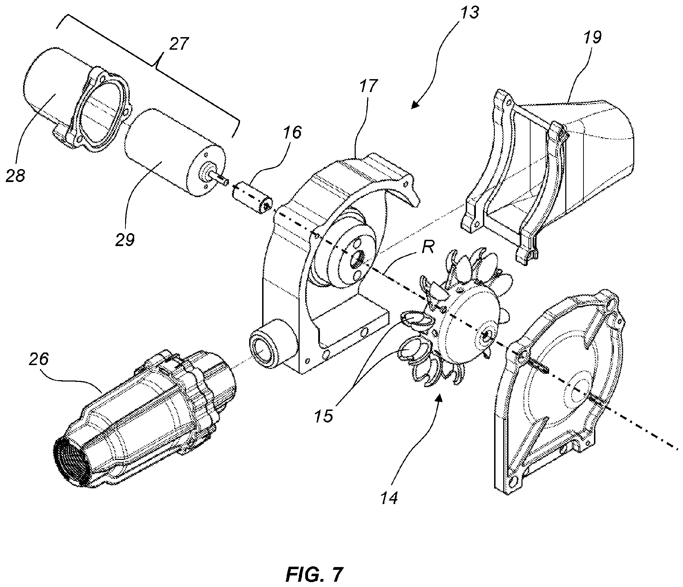

**FIG. 7** is an exploded view of the detail of **FIG. 6****;**
**FIG. 8** is an exploded view of an assembly kit of the diffuser device of the preceding figures;
**FIG. 9** is an image of a detail of the sprinkler according to the invention during operation;
**FIG. 10** is an image of an assembly view of the sprinkler according to the invention during operation.

### Detailed description of several exemplary embodiments

With reference to the mentioned figures, there is shown a liquid diffuser device according to the invention, globally indicated with reference numeral **1,** intended for use to distribute an irrigation liquid, typically water, on a soil to be irrigated.

The base component of the device **1** is a conventional impulse sprinkler which comprises a spout tube **2** defining a longitudinal axis **L** and having at an outlet end **3** a nozzle **4** with an outlet section adapted to generate a main jet **Gₚ.**

In one embodiment, the longitudinal axis **L** of the spout tube **2** is normally inclined with respect to the horizontal, for example with an angle of about 24° depending on the pressure of the irrigation liquid, as well as the wind strength and direction and the atmospheric conditions.

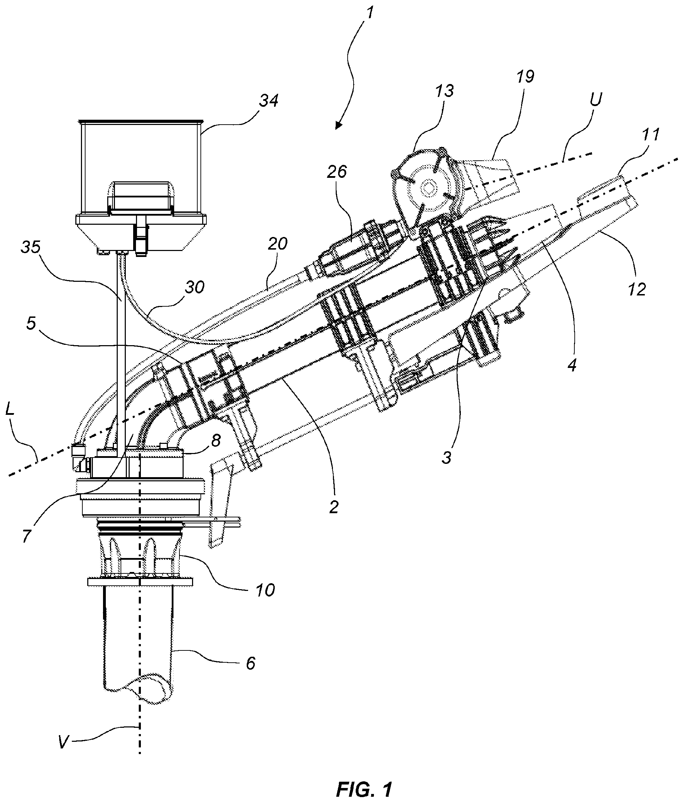

At the opposite inlet end **5,** the spout tube **2** is fluidically connected to a supply tube or line **6** for supplying pressurised water schematically shown in **FIG. 1****.**

In one embodiment, the spout tube **2** may consist of a section of a cylindrical tube made of metal or synthetic material and it is connected to the supply line **6** by means of an elbow or curved fitting **7** with an end flange **8** coupled by means of bolts to a rotary joint **9.**

In one embodiment, the rotary joint **9** is connected to a flanged cylindrical fitting **10,** in turn joined to the supply pipe **6** of the pressurised irrigation liquid.

Thanks to such rotary joint **9,** the spout tube **2** may pivot around a substantially vertical axis **V** so as to distribute the irrigation liquid on a circular section or on a complete arc.

In the embodiment shown in the drawings, the sprinkler is of the impulse type, well-known and for example described in the patents of this Applicant EP3421137 or EP630689, wherein the main jet **Gₚ** periodically interacts with a deflector **11** arranged at the end of an oscillating arm **12** to impart to the spout tube **2** a stepped rotation in the clockwise or anticlockwise direction on a circular section or on a complete rotation around the vertical axis **V.**

In one embodiment, the device **1** comprises a hydraulic turbine **13** supplied by a minimal part of the liquid flow coming from the supply line **6.**

In one embodiment, the turbine **13** has a rotor **14** with a plurality of spoon-like vanes **15,** fitted on a shaft **16** with rotation axis **R** that is substantially transversal with respect to the longitudinal axis **L.**

Preferably, the turbine **13** is of the Pelton type characterised by a high performance even in the presence of changes in the liquid flow rate.

Suitably, the rotor **14** of the turbine **13** is housed and fully enclosed in a hollow body **17** having a cavity **18** that is substantially cylindrical with axis that is substantially coincident with the transverse axis **R** of the shaft **16.**

The hollow body **17** has a discharge mouth **19** adapted to collect and at least partly adjust the flow scattered out from the vanes **15** of the rotor **14** and generate a direct flow directed towards the main jet **Gₚ.**

The turbine **13** is supplied by a minimal part of the irrigation liquid, drawn from the supply line **6** using appropriate bleeding means.

In one embodiment, the bleeding means comprise a pipe **20** having a draining end **21** connected to the base of the curved fitting **7** and an outlet end **22** placed in fluid communication with the inlet opening of the hollow body **17.**

At the outlet end **22** of pipe **20** there is provided an injector nozzle **23** having a frustoconical internal end with axis substantially aligned with the vanes **15** of the rotor **14** of the turbine **13** and at least partially aligned with the discharge mouth **19** of the hollow body **17.**

In one embodiment, between the curved fitting **7** and the rotary joint **9** there is interposed a spacer **24** into which there is inserted the draining end **21** of the pipe **20** and there is housed an annular filter **25** with holes dimensioned to retain impurities present in the pressurised liquid supply line and avoid clogging and blocking the injector **23** with resulting blocking of the turbine **13.**

In one embodiment, immediately upstream of the injector **23** there is installed a pressure regulator **26,** for example of the type described and claimed in the document WO2022243879 in the name of the same Applicant, adapted to adjust the supply pressure of the turbine and contain the rotation speed of the rotor **14** within a predetermined substantially constant value depending on the type of electric generator and its structural characteristics.

In one embodiment, by way of example, the aforementioned predetermined pressure value may be comprised between 2.5 and 3.5 bar and it is preferably close to 3 bar.

A peculiar feature of the invention lies in that the turbine **13** is mounted on the spout tube **2** in proximity of the outlet end thereof, more precisely in proximity of the nozzle **4.**

Furthermore, the discharge mouth **19** is configured to generate a secondary jet **Gₛ** with an axis **U** directed towards the main jet **Gₚ** so as to be fluid-dynamically drawn by the latter, so as to obtain the joining and simultaneous distribution of the two jets **Gₚ** and **Gₛ** on the soil to be irrigated.

In one embodiment, the nozzle **4** has an outlet section adapted to generate a high-speed and relatively compact main jet **Gₚ** with respect to the broken jet **Gₛ** of the discharge mouth **19.**

In one embodiment, the discharge mouth **19** is located a few centimetres away from the nozzle **4** and it has its axis **U** inclined by a few degrees and convergent with respect to the longitudinal axis **L** of the spout tube **2** in such a manner to direct and converge the secondary jet **Gₛ** with the main jet **Gₚ.**

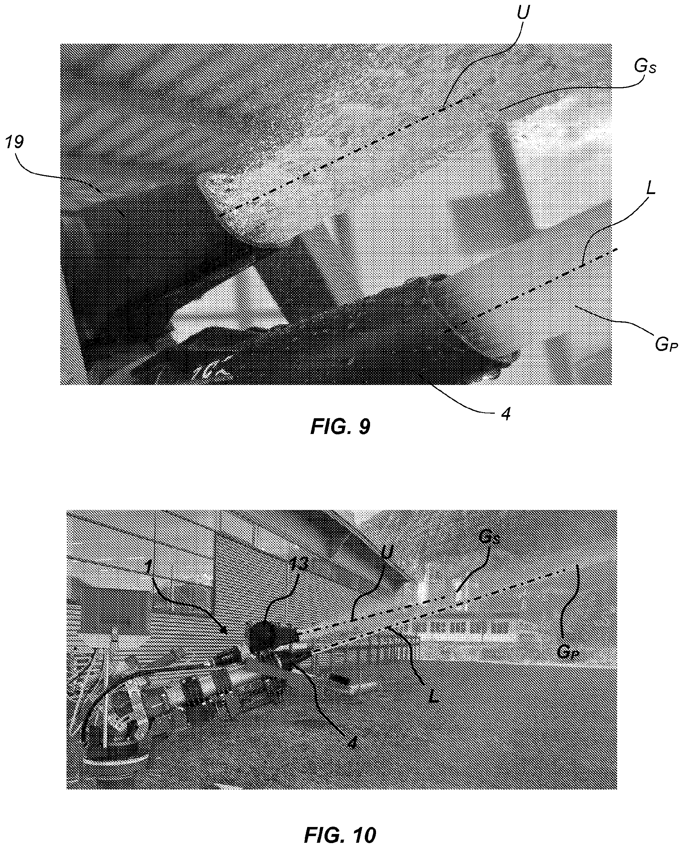

In use, the secondary jet **Gₛ** is rather scattered and broken, not compact in any case, besides with insufficient energy to be distributed like the main jet **Gₚ** towards the site to be irrigated. On the contrary, the main jet **Gₚ** is relatively compact with a relatively high velocity, so as to drive and drag around itself an air boundary layer with an approximately annular shape, almost acting as an ejector in open air, as schematically shown in **FIG. 9****.** When the secondary jet **Gₛ** emitted by the mouth **19** drops by gravity on the main jet **Gₚ,** the former is fluid-dynamically aspirated and suctioned by the latter and it is joined thereto so that the two jets are distributed together efficiently.

In one embodiment, on the shaft **16** of the turbine **13** there is mounted an electric generator **27** of the conventional type comprising a stator **28,** possibly with permanent magnets, and a rotor **29** of the conventional type.

The electric generator is connected using an electric cable **30** to a rechargeable battery **31** by interposition of a charge regulator **32** for controlling and adjusting the intensity of the current required to charge the battery.

By way of non-limiting example, the current exiting from the current generator has a power of about 9W with an intensity of 0.5A. A part of the current equal to about 0.4A is used to charge the battery **31,** while the remaining part of about 0.1A is used to supply the electrical/electronical appliances of the sprinkler. When the battery **31** is fully discharged, it is continuously charged by the generator **27** until it reaches a predetermined voltage, for example of 19V. From this point forward, the battery is charged with current which decreases progressively up to 0A so as to reach a maximum voltage of about 20,5V. Then, the charging is interrupted to prevent the battery cells from being damaged and the electrical energy is used only for supplying the electrical/electronic appliances of the sprinkler.

In one embodiment, the battery **31** is of the commercial type, for example Makita^{®}, Bosch^{®} or the like, so as to keep the basic functions of the system operative if it is not used and so as to be able to reactivate it from a remote position.

The electrical/electronic appliances powered by the battery **31** and/or by the generator **27** comprise, by way of example, a charge regulator **32,** a microcontroller control board **33,** radio transceiver means or remotely to receive and send analogue or digital electrical signals to a central control unit, actuating means for controlling various actuators and actuations, sensor means or for receiving position or functional electrical signals not shown in the figures.

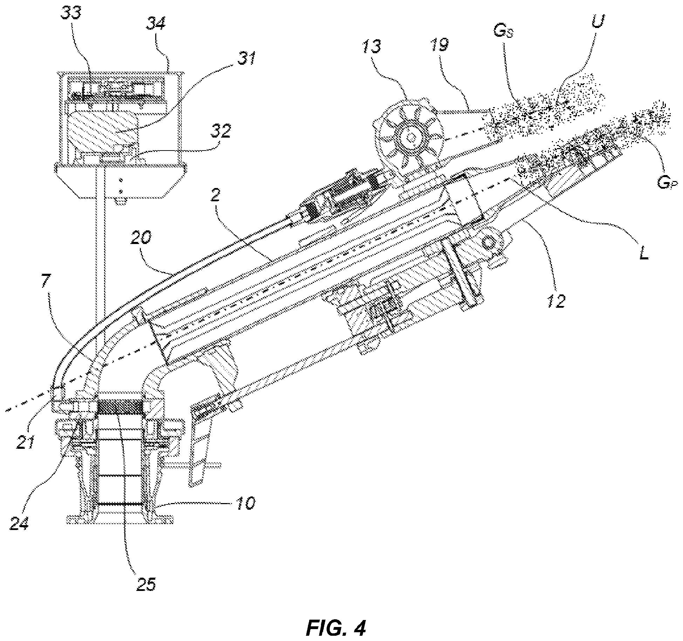

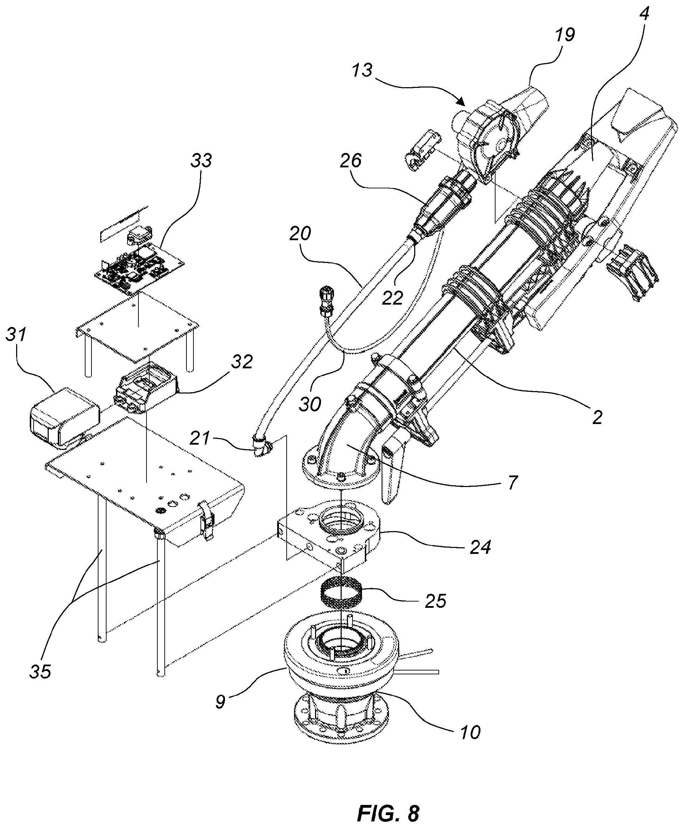

In one embodiment, all these electrical and electronic components, including the rechargeable battery **31,** the charge regulator **32** and the control board **33** are housed in a sealed container **34** that is electrically insulated removably anchored to the spout tube **2** or to the curved fitting **7,** to move integrally with the latter, through suitable columns **35** or similar connections, as clearly shown in **FIGS. 4** and **8****.**

Similarly, also the turbine **13** and the current generator **27** are removably anchored to the spout tube **2** during the operation thereof by means of respective brackets and universal connection members.

In one embodiment, it may be provided that the turbine **13,** the electric generator **27** and the container **34** with the relative electrical and electronic components therein form a kit for converting a conventional sprinkler into an electrically self-sufficient sprinkler, in which the discharge mouth **19** of the turbine **13** is configured to generate a secondary jet converging towards the main jet and is joined with the latter before the distribution on the soil to be irrigated.

In the light of the above, it is clear that the sprinkler according to the invention achieves the pre-established objects and in particular it allows to provide a sprinkler capable of independently generating electrical energy using a minimal part of the flow of the supply line and which, at the same time, effectively uses the entire flow rate of the liquid coming from the supply line.

### Industrial applicability

The present invention can be applied at industrial level because the sprinkler device can be manufactured on an industrial scale by industries belonging to the field of devices for the irrigation and distribution of liquids used in farming and industry.

## Claims

1. A remotely controllable sprinkler with built-in electric generator, comprising:
- a spout tube **(2)** having a longitudinal axis and an inlet end placed in fluidic communication with a supply line **(6)** of a pressurized liquid;
- a nozzle **(4)** positioned at the outlet end **(3)** of said spout tube **(2)** to generate a main jet **(Gₚ);**
- bleeding means **(20, 21)** for draining a secondary flow of the supply line **(6);**
- a hydraulic turbine **(13)** fluidically connected with said bleeding means **(20, 21)** to convert the kinetic energy of the drained flow into electrical energy;
- an electric generator **(27)** mechanically connected to said turbine **(13);**
- control means **(33)** for remotely controlling the sprinkler;
**characterised in that** said turbine **(13)** is located near the outlet end **(3)** of the spout tube **(2)** and has a discharge mouth **(19)** configured to generate a secondary jet **(Gₛ)** directed towards said main jet **(Gₚ)** so as to be dragged and incorporated into the latter and obtain the complete joining and distribution of the two jets on the soil to be irrigated.

2. Sprinkler as claimed in claim 1, **characterised in that** said nozzle **(4)** is adapted to generate a relatively compact main jet **(Gₚ)** with a relatively high velocity to create a substantially annular fluid-dynamic dragging zone around itself.

3. Sprinkler as claimed in claim 1, **characterised in that** said discharge mouth **(19)** is in the immediate vicinity of said nozzle **(4)** so that the distance between said main jet **(Gₚ)** and said secondary jet **(Gₛ)** is a few centimetres.

4. Sprinkler as claimed in claim 1, **characterised in that** said discharge mouth **(19)** is configured to direct said secondary jet **(Gₛ)** along a secondary axis **(U)** that is slightly inclined and converging towards said longitudinal axis **(L).**

5. Sprinkler as claimed in to claim 1, **characterised in that** said turbine has a rotor **(14)** with vanes **(15),** which rotor is mounted on a shaft **(16)** with a rotation axis **(R)** substantially transversal with respect to said longitudinal axis **(L).**

6. Sprinkler as claimed in claim 5, **characterised in that** the vanes **(15)** of said hydraulic turbine **(13)** are spoon-shaped and the turbine is of the Pelton type.

7. Sprinkler as claimed in claim 5, **characterised in that** said rotor **(14)** is completely enclosed and housed in a hollow body **(17)** with a substantially cylindrical cavity **(18)** having a transverse axis coinciding with the transversal rotation axis **(R)** of said shaft **(16).**

8. Sprinkler as claimed in claim 1, **characterised in that** said bleeding means comprise a connecting pipe **(20)** of said pressurized water supply line **(6)** with said turbine **(13).**

9. Sprinkler as claimed in claims 7 and 8, **characterised in that** said connecting pipe **(20)** has a draining section in fluidic communication with a curved fitting **(7)** and an outlet section **(22)** in fluidic communication with said hollow body **(17)** of the turbine **(13).**

10. Sprinkler as claimed in claim 9, **characterised in that** an injection nozzle **(23)** is provided at said outlet section **(22)** of said connecting pipe **(20),** said injection nozzle being substantially aligned with the vanes **(15)** of said turbine **(13)** and at least partially aligned with said discharge mouth **(19).**

11. Sprinkler as claimed in claim 10, **characterised in that** a filter **(25)** is provided within said fitting **(7)** in proximity of said draining section **(21)** to retain impurities present in the pressurised liquid supply line.

12. Sprinkler as claimed in claim 11, **characterised in that** said filter **(25)** is of the annular type and it has holes smaller than the inner diameter of said injection nozzle **(23)** of the turbine **(13)** to prevent the turbine from stopping and disrupting of electricity generation.

13. Sprinkler as claimed in claim 10, **characterised in that** said connecting pipe **(20)** has a pressure regulator **(26)** immediately upstream of said turbine **(13)** adapted to adjust the supply pressure of said turbine to a predetermined substantially constant pressure value.

14. Sprinkler as claimed in claim 13, **characterised in that** said predetermined pressure value is comprised between 2,5 and 3,5 bar and it is preferably close to 3 bar to keep the rotary speed of the turbine **(13)** constant.

15. Sprinkler as claimed in claim 1, **characterised in that** said electric generator **(27)** is connected by means of an electric cable **(30)** to a rechargeable battery **(31)** with the interposition of a charge regulator **(32)** to control the charge current and voltage with predetermined values to optimise the battery charge **(31).**

16. Sprinkler as claimed in claim 15, **characterised in that** it comprises an electrically insulated sealed container **(34)** associated with said spout tube and containing internally thereof said rechargeable battery **(31),** said charge regulator **(32)** and a microcontroller control board **(33),** said control board **(33)** being connected to actuation means, sensor means and remote connection means of the sprinkler with a stationary central control unit.

17. Sprinkler as claimed in claim 16, **characterised in that** said turbine **(13),** said generator **(27)** and said sealed container **(34)** are removably anchored to said spout tube **(2)** to move integrally with the latter during its operation by means of respective brackets and/or universal anchoring means.

18. A kit incorporating an electric generator and remote control means to a conventional sprinkler, wherein the sprinkler comprises a spout tube **(2)** having a longitudinal axis **(L),** an inlet end **(5)** placed in fluid communication with a supply line **(6)** of pressurised liquid and an outlet end **(3)** provided with a nozzle **(4)** for generating a main irrigation jet **(Gₚ),** wherein said kit comprises a turbine **(13)** with a discharge mouth **(19)** adapted to generate a secondary jet **(Gₛ),** an electric generator **(27)** operatively associated with said turbine **(13)** and a sealed container **(34)** housing internally thereof at least one rechargeable battery **(31)** connected to said generator **(27),** a charge regulator **(32)** and remote electronic control means, mechanical connection means being provided for removably anchoring said turbine **(13),** said generator **(27)** and said sealed container **(34)** to said spout tube **(2)** so that the discharge mouth **(19)** of the turbine **(13)** generates a secondary jet **(Gₛ)** converging towards said main jet **(Gₚ)** and fluid dynamically drawn by the latter before distribution on the soil to be irrigated of both jets **(Gₚ, Gₛ)** simultaneously.

## Patentansprüche

1. Ein fernsteuerbarer Regner mit eingebautem elektrischen Generator, umfassend:
- ein Auslassrohr (2) mit einer Längsachse und einem Einlassende, das in Fluidverbindung mit einer Versorgungsleitung (6) für eine unter Druck stehende Flüssigkeit steht;
- eine Düse (4), die am Auslassende (3) des genannten Auslassrohres (2) angeordnet ist, um einen Hauptstrahl (G_{P}) zu erzeugen;
- Entnahmemittel (20, 21) zum Ableiten eines Sekundärstroms aus der Versorgungsleitung (6);
- eine hydraulische Turbine (13), die fluidisch mit den genannten Entnahmemitteln (20, 21) verbunden ist, um die kinetische Energie des abgeleiteten Stroms in elektrische Energie umzuwandeln;
- einen elektrischen Generator (27), der mechanisch mit der genannten Turbine (13) verbunden ist;
- Steuerungsmittel (33) zur Fernsteuerung des Regners;
**dadurch gekennzeichnet, dass** die genannte Turbine (13) in der Nähe des Auslassendes (3) des Auslassrohres (2) angeordnet ist und eine Auslassöffnung (19) aufweist, die dazu konfiguriert ist, einen Sekundärstrahl (G_{S}) zu erzeugen, der auf den genannten Hauptstrahl (G_{P}) gerichtet ist, so dass er von diesem mitgerissen und in diesen aufgenommen wird, um die vollständige Vereinigung und Verteilung der beiden Strahlen auf dem zu bewässernden Boden zu erreichen.

2. Regner nach Anspruch 1, **dadurch gekennzeichnet, dass** die genannte Düse (4) dazu geeignet ist, einen relativ kompakten Hauptstrahl (G_{P}) mit einer relativ hohen Geschwindigkeit zu erzeugen, um um diesen herum eine im Wesentlichen ringförmige fluiddynamische Mitreißzone zu schaffen.

3. Regner nach Anspruch 1, **dadurch gekennzeichnet, dass** sich die genannte Auslassöffnung (19) in unmittelbarer Nähe der genannten Düse (4) befindet, so dass der Abstand zwischen dem genannten Hauptstrahl (G_{P}) und dem genannten Sekundärstrahl (G_{S}) einige Zentimeter beträgt.

4. Regner nach Anspruch 1, **dadurch gekennzeichnet, dass** die genannte Auslassöffnung (19) dazu konfiguriert ist, den genannten Sekundärstrahl (G_{S}) entlang einer Sekundärachse (U) zu lenken, die leicht geneigt ist und auf die genannte Längsachse (L) konvergiert.

5. Regner nach Anspruch 1, **dadurch gekennzeichnet, dass** die genannte Turbine einen Rotor (14) mit Schaufeln (15) aufweist, wobei der Rotor auf einer Welle (16) mit einer Rotationsachse (R) montiert ist, die im Wesentlichen quer zu der genannten Längsachse (L) verläuft.

6. Regner nach Anspruch 5, **dadurch gekennzeichnet, dass** die Schaufeln (15) der genannten hydraulischen Turbine (13) löffelförmig ausgebildet sind und die Turbine vom Pelton-Typ ist.

7. Regner nach Anspruch 5, **dadurch gekennzeichnet, dass** der genannte Rotor (14) vollständig umschlossen und in einem Hohlkörper (17) mit einem im Wesentlichen zylindrischen Hohlraum (18) aufgenommen ist, der eine Querachse aufweist, die mit der quer verlaufenden Rotationsachse (R) der genannten Welle (16) zusammenfällt.

8. Regner nach Anspruch 1, **dadurch gekennzeichnet, dass** die genannten Entnahmemittel eine Verbindungsleitung (20) der genannten Druckwasserversorgungsleitung (6) mit der genannten Turbine (13) umfassen.

9. Regner nach den Ansprüchen 7 und 8, **dadurch gekennzeichnet, dass** die genannte Verbindungsleitung (20) einen Entnahmeabschnitt aufweist, der in Fluidverbindung mit einem gekrümmten Verbindungsstück (7) steht, sowie einen Auslassabschnitt (22), der in Fluidverbindung mit dem genannten Hohlkörper (17) der Turbine (13) steht.

10. Regner nach Anspruch 9, **dadurch gekennzeichnet, dass** an dem genannten Auslassabschnitt (22) der genannten Verbindungsleitung (20) eine Einspritzdüse (23) vorgesehen ist, wobei die genannte Einspritzdüse im Wesentlichen mit den Schaufeln (15) der genannten Turbine (13) und zumindest teilweise mit der genannten Auslassöffnung (19) ausgerichtet ist.

11. Regner nach Anspruch 10, **dadurch gekennzeichnet, dass** innerhalb des genannten Verbindungsstücks (7) in der Nähe des genannten Entnahmeabschnitts (21) ein Filter (25) vorgesehen ist, um in der Druckflüssigkeitsversorgungsleitung (6) vorhandene Verunreinigungen zurückzuhalten.

12. Regner nach Anspruch 11, **dadurch gekennzeichnet, dass** der genannte Filter (25) vom Ringtyp ist und Öffnungen aufweist, die kleiner sind als der Innendurchmesser der genannten Einspritzdüse (23) der Turbine (13), um ein Anhalten der Turbine und eine Unterbrechung der Stromerzeugung zu verhindern.

13. Regner nach Anspruch 10, **dadurch gekennzeichnet, dass** die genannte Verbindungsleitung (20) unmittelbar stromaufwärts der genannten Turbine (13) einen Druckregler (26) aufweist, der dazu geeignet ist, den Versorgungsdruck der genannten Turbine auf einen vorbestimmten, im Wesentlichen konstanten Druckwert einzustellen.

14. Regner nach Anspruch 13, **dadurch gekennzeichnet, dass** der genannte vorbestimmte Druckwert zwischen 2,5 und 3,5 bar liegt und vorzugsweise nahe bei 3 bar liegt, um die Drehzahl der Turbine (13) konstant zu halten.

15. Regner nach Anspruch 1, **dadurch gekennzeichnet, dass** der genannte elektrische Generator (27) mittels eines elektrischen Kabels (30) mit einer wiederaufladbaren Batterie (31) unter Zwischenschaltung eines Ladereglers (32) verbunden ist, um Ladestrom und Ladespannung auf vorbestimmte Werte zu regeln und dadurch die Aufladung der Batterie (31) zu optimieren.

16. Regner nach Anspruch 15, **dadurch gekennzeichnet, dass** er einen elektrisch isolierten, abgedichteten Behälter (34) umfasst, der dem genannten Auslassrohr zugeordnet ist und in seinem Inneren die genannte wiederaufladbare Batterie (31), den genannten Laderegler (32) und eine Mikrocontroller-Steuerplatine (33) enthält, wobei die genannte Steuerplatine (33) mit Betätigungsmitteln, Sensormitteln und Fernverbindungsmitteln des Regners mit einer stationären zentralen Steuereinheit verbunden ist.

17. Regner nach Anspruch 16, **dadurch gekennzeichnet, dass** die genannte Turbine (13), der genannte Generator (27) und der genannte abgedichtete Behälter (34) lösbar an dem genannten Auslassrohr (2) befestigt sind, um sich während des Betriebs mittels entsprechender Halterungen und/oder universeller Befestigungsmittel gemeinsam mit diesem zu bewegen.

18. Bausatz zur Nachrüstung eines herkömmlichen Regners mit einem elektrischen Generator und Fernsteuerungsmitteln, wobei der Regner ein Auslassrohr (2) mit einer Längsachse (L), ein Einlassende (5), das in Fluidverbindung mit einer Versorgungsleitung (6) für eine unter Druck stehende Flüssigkeit steht, und ein mit einer Düse (4) versehenes Auslassende (3) zur Erzeugung eines Hauptbewässerungsstrahls (G_{P}) umfasst,
wobei der genannte Bausatz eine Turbine (13) mit einer Auslassöffnung (19), die dazu geeignet ist, einen Sekundärstrahl (G_{S}) zu erzeugen, einen betriebswirksam mit der genannten Turbine (13) verbundenen elektrischen Generator (27) sowie einen abgedichteten Behälter (34) umfasst, der in seinem Inneren zumindest eine wiederaufladbare Batterie (31), die mit dem genannten Generator (27) verbunden ist, einen Laderegler (32) und elektronische Fernsteuerungsmittel aufnimmt,
wobei mechanische Verbindungsmittel vorgesehen sind, um die genannte Turbine (13), den genannten Generator (27) und den genannten abgedichteten Behälter (34) lösbar an dem genannten Auslassrohr (2) zu befestigen, so dass die Auslassöffnung (19) der Turbine (13) einen Sekundärstrahl (G_{S}) erzeugt, der auf den genannten Hauptstrahl (G_{P}) konvergiert und vor der gleichzeitigen Verteilung beider Strahlen (G_{P}, G_{S}) auf dem zu bewässernden Boden von diesem fluiddynamisch mitgerissen wird.

## Revendications

1. En arroseur télécommandable avec générateur électrique intégré, comprenant:
- un tube de projection (2) présentant un axe longitudinal et une extrémité d'entrée placée en communication fluidique avec une conduite d'alimentation (6) d'un liquide sous pression;
- une buse (4) positionnée à l'extrémité de sortie (3) dudit tube de projection (2) pour générer un jet principal (G_{P});
- des moyens de dérivation (20, 21) destinés à prélever un débit secondaire à partir de la conduite d'alimentation (6);
- une turbine hydraulique (13) reliée fluidiquement auxdits moyens de dérivation (20, 21) afin de convertir l'énergie cinétique du débit prélevé en énergie électrique;
- un générateur électrique (27) mécaniquement relié à ladite turbine (13);
- des moyens de commande (33) destinés à la commande à distance de l'arroseur;
**caractérisé en ce que** ladite turbine (13) est située à proximité de l'extrémité de sortie (3) du tube de projection (2) et comporte un orifice de décharge (19) configuré pour générer un jet secondaire (G_{S}) dirigé vers ledit jet principal (G_{P}) de manière à être entraîné et incorporé dans celui-ci afin d'obtenir la réunion complète et la distribution des deux jets sur le sol à irriguer.

2. Arroseur selon la revendication 1, **caractérisé en ce que** ladite buse (4) est adaptée pour générer un jet principal (G_{P}) relativement compact avec une vitesse relativement élevée afin de créer autour de celui-ci une zone d'entraînement fluidodynamique sensiblement annulaire.

3. Arroseur selon la revendication 1, **caractérisé en ce que** ledit orifice de décharge (19) est situé à proximité immédiate de ladite buse (4), de sorte que la distance entre ledit jet principal (G_{P}) et ledit jet secondaire (G_{S}) est de quelques centimètres.

4. Arroseur selon la revendication 1, **caractérisé en ce que** ledit orifice de décharge (19) est configuré pour diriger ledit jet secondaire (G_{S}) selon un axe secondaire (U) légèrement incliné et convergent vers ledit axe longitudinal (L).

5. Arroseur selon la revendication 1, **caractérisé en ce que** ladite turbine comporte un rotor (14) muni d'augets (15), lequel rotor est monté sur un arbre (16) présentant un axe de rotation (R) sensiblement transversal par rapport audit axe longitudinal (L).

6. Arroseur selon la revendication 5, **caractérisé en ce que** les augets (15) de ladite turbine hydraulique (13) sont de forme en cuillère et **en ce que** la turbine est du type Pelton.

7. Arroseur selon la revendication 5, **caractérisé en ce que** ledit rotor (14) est entièrement enfermé et logé dans un corps creux (17) présentant une cavité sensiblement cylindrique (18) ayant un axe transversal coincidant avec l'axe transversal de rotation (R) dudit arbre (16).

8. Arroseur selon la revendication 1, **caractérisé en ce que** lesdits moyens de dérivation comprennent une conduite de raccordement (20) de ladite conduite d'alimentation en eau sous pression (6) avec ladite turbine (13).

9. Arroseur selon les revendications 7 et 8, **caractérisé en ce que** ladite conduite de raccordement (20) comporte une section de dérivation en communication fluidique avec un raccord coudé (7) et une section de sortie (22) en communication fluidique avec ledit corps creux (17) de la turbine (13).

10. Arroseur selon la revendication 9, **caractérisé en ce qu'**une buse d'injection (23) est prévue au niveau de ladite section de sortie (22) de ladite conduite de raccordement (20), ladite buse d'injection étant sensiblement alignée avec les augets (15) de ladite turbine (13) et au moins partiellement alignée avec ledit orifice de décharge (19).

11. Arroseur selon la revendication 10, **caractérisé en ce qu'**un filtre (25) est prévu à l'intérieur dudit raccord coudé (7), à proximité de ladite section de dérivation (21), afin de retenir les impuretés présentes dans la conduite d'alimentation en liquide sous pression.

12. Arroseur selon la revendication 11, **caractérisé en ce que** ledit filtre (25) est de type annulaire et présente des ouvertures plus petites que le diamètre intérieur de ladite buse d'injection (23) de la turbine (13), afin d'empêcher l'arrêt de la turbine et l'interruption de la production d'électricité.

13. Arroseur selon la revendication 10, **caractérisé en ce que** ladite conduite de raccordement (20) comporte un régulateur de pression (26) immédiatement en amont de ladite turbine (13), adapté pour régler la pression d'alimentation de ladite turbine à une valeur de pression prédéterminée sensiblement constante.

14. Arroseur selon la revendication 13, **caractérisé en ce que** ladite valeur de pression prédéterminée est comprise entre 2,5 et 3,5 bars et est de préférence proche de 3 bars afin de maintenir constante la vitesse de rotation de la turbine (13).

15. Arroseur selon la revendication 1, **caractérisé en ce que** ledit générateur électrique (27) est relié, au moyen d'un câble électrique (30), à une batterie rechargeable (31), avec interposition d'un régulateur de charge (32) destiné à contrôler le courant et la tension de charge selon des valeurs prédéterminées afin d'optimiser la charge de la batterie (31).

16. Arroseur selon la revendication 15, **caractérisé en ce qu'**il comprend un conteneur étanche et électriquement isolé (34), associé audit tube de projection et contenant à l'intérieur de celui-ci ladite batterie rechargeable (31), ledit régulateur de charge (32) et une carte de commande à microcontrôleur (33), ladite carte de commande (33) étant reliée à des moyens d'actionnement, à des moyens de détection et à des moyens de connexion à distance de l'arroseur avec une unité centrale de commande fixe.

17. Arroseur selon la revendication 16, **caractérisé en ce que** ladite turbine (13), ledit générateur (27) et ledit conteneur étanche (34) sont ancrés de manière amovible audit tube de projection (2) afin de se déplacer intégralement avec celui-ci pendant son fonctionnement au moyen de supports respectifs et/ou de moyens de fixation universels.

18. Kit d'intégration d'un générateur électrique et de moyens de commande à distance à un arroseur conventionnel, l'arroseur comprenant un tube de projection (2) présentant un axe longitudinal (L), une extrémité d'entrée (5) placée en communication fluidique avec une conduite d'alimentation (6) d'un liquide sous pression et une extrémité de sortie (3) munie d'une buse (4) pour générer un jet principal d'irrigation (G_{P}), ledit kit comprenant une turbine (13) présentant un orifice de décharge (19) adapté pour générer un jet secondaire (Gs), un générateur électrique (27) associé de manière opérationnelle à ladite turbine (13) et un conteneur étanche (34) logeant intérieurement au moins une batterie rechargeable (31) reliée audit générateur (27), un régulateur de charge (32) et des moyens électroniques de commande à distance, des moyens de liaison mécanique étant prévus pour ancrer de manière amovible ladite turbine (13), ledit générateur (27) et ledit conteneur étanche (34) audit tube de projection (2), de sorte que l'orifice de décharge (19) de la turbine (13) génère un jet secondaire (G_{S}) convergeant vers ledit jet principal (G_{P}) et entraîné fluidodynamiquement par celui-ci avant la distribution simultanée des deux jets (G_{P}, G_{S}) sur le sol à irriguer.
